# EUROPEAN PATENT SPECIFICATION

(11) **EP 2 490 497 B1**
(45) Date of publication and mention of the grant of the patent: **21.05.2014**
(21) Application number: 11290089.9
(22) Date of filing: 15.02.2011
(51) Int. Cl.: H04W 72/04, H04W 16/32, H04W 24/10, H04W 84/04

(54) **A mobile and a base station transceiver, methods and computer programs for providing measurement configuration and measurement result**
Mobiltelefon und Basisstationstransceiver, Verfahren und Computerprogramme zur Bereitstellung von Messkonfiguration und Messergebnissen
Émetteur-récepteur de station mobile et de base, procédés et programmes informations pour la fourniture d'une configuration de mesure et d'un résultat de mesure

(43) Date of publication of application: 22.08.2012
(73) Proprietor: Alcatel Lucent, 75007 Paris (FR)
(72) Inventor: Worrall, Chandrika, Newbury, Berkshire RG14 6SN (GB); Palat, Sudeep, Swindon, Wiltshire SN5 6EE (GB); Lim, Seau Sian, Swindon SN1 4GU (GB)
(74) Representative: Wetzel, Emmanuelle

(56) References cited:
- ALCATEL-LUCENT: "Signalling support for Almost Blank Subframe patterns", 3GPP DRAFT; R2-106449, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467151, [retrieved on 2010-11-09]
- INTEL CORPORATION: "Inter-frequency measurement restriction under eICIC", 3GPP DRAFT; R2-110172-EICIC-INTER-FREQ-MEAS-RESTRICTIO N, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050474636, [retrieved on 2011-01-11]
- ALCATEL-LUCENT: "Need for multiple ABS patterns for CQI measurements", 3GPP DRAFT; R2-106453, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467154, [retrieved on 2010-11-09]
- ALCATEL-LUCENT ET AL: "RRC signalling design for Almost Blank Subframe patterns", 3GPP DRAFT; R2-106451, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467153, [retrieved on 2010-11-09]
- ALCATEL-LUCENT SHANGHAI BELL ET AL: "Specification Considerations Related to ABS for RLM and RSRP/RSRQ Measurements", 3GPP DRAFT; R1-106396_REVISION OF R1-105999, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 10 November 2010 (2010-11-10), XP050468253, [retrieved on 2010-11-10]
- ERICSSON ET AL: "Impact of Enhanced ICIC for Non-CA based Deployment on RAN4 Requirements", 3GPP DRAFT; R4-103738 EICIC REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Xian; 20101011, 7 October 2010 (2010-10-07), XP050455388, [retrieved on 2010-10-07]

## Description

The present invention relates to wireless communications, more particularly but not exclusively to radio resource management and inter-frequency measurements in a mobile communication system.

### Background

In nowadays mobile communication networks heterogeneous architectures become more and more important. Heterogeneous networks (HetNets for abbreviation) are networks which utilize cell types of different sizes, as for example macrocells, picocells, and femtocells. Such cells are established by base station transceivers for which their coverage areas are determined by their transmission power and interference condition. Picocells and femtocells are cells having a smaller coverage area than macrocells. In some network scenarios the small cells' coverage area can be surrounded by the coverage area of a macrocell. The small cells can be deployed to extend the capacity of the network. With regard to standardization, within the 3^{rd} generation partnership project (3GPP for abbreviation), HetNets have been added to the scope of the Long Term Evolution-Advanced (LTE-A for abbreviation) work item. Since the cells or base stations in such networks may utilize the same frequency resources such architectures can suffer from interference created by the overlapping coverage areas of these cells. Therefore enhanced inter-cell interference coordination (ICIC for abbreviation) for co-channel HetNet deployment is one of the key techniques for LTE Release 10 (Rel-10 for abbreviation). Co-channel HetNets comprise macrocells and small cells operating on the same frequency channel. Such deployments present some specific interference scenarios for which ICIC techniques are utilized.

In one example scenario, the small cells are picocells, which are open to users of the macrocell network. In order to ensure that such picocells carry a useful share of the total traffic load, user equipment (UE for abbreviation) or mobile transceivers may be programmed or configured to associate preferentially with the picocells rather than the macrocells, for example by biasing the signal-to-interference-and-noise ratio (SINR for abbreviation) threshold at which they will select a picocell to associate with. Under such conditions, UEs near the edge of a picocell's coverage area may suffer strong interference from one or more macrocells. In order to alleviate such interference, some subframes may be configured as "blank" or "almost blank" in a macrocell. A blank subframe may contain no transmission from the macrocell, while an "almost blank" subframe typically contains no data transmission and little or no control signaling transmission, but may contain reference signal transmissions in order to ensure backward compatibility with legacy terminals, which expect to find the reference signals for measurements but are unaware of the configuration of almost blank subframes. Almost blank subframes may also contain synchronization signals, broadcast control information and/or paging signals. The utilization of "blank" or "almost blank" subframes enables reduced or even suppressed interference for the picocell within these subframes. Hence, "blank" or "almost blank" subframes may be regarded as sub-frames during which at least some radio resources are suspended from transmission.

However, to make use of blank or almost blank subframes (ABSs for abbreviation) effectively (note that hereafter the term "ABS" is used, and should be understood to include both blank and almost blank subframes), signaling is needed from the macrocell to the picocell, e.g. across the corresponding backhaul interface, known in LTE as the "X2" interface. For LTE Release 10, it has been agreed that this X2 signaling will take the form of a coordination bitmap to indicate the ABS pattern (for example with each bit corresponding to one subframe in a series of subframes, with the value of the bit indicating whether the subframe is an ABS or not). Such signaling can help the picocell to schedule data transmissions in the picocell appropriately to avoid interference (e.g. by scheduling transmissions to UEs near the edge of the picocell during ABSs), and to signal to the UEs the subframes which should have low macrocellular interference and should therefore be used for measurements. Examples for such measurements are measurements for Radio Resource Management (RRM for abbreviation), which typically relate to handover, measurements for Radio Link Monitoring (RLM for abbreviation), which typically relate to detection of serving radio link failure, and measurements for Channel State Information (CSI for abbreviation), which typically relate to link adaptation on the serving radio link.

In such an example scenario, Radio Resource Control (RRC for abbreviation) signaling can be utilized to indicate to the UEs the set of subframes which they should use for measurements (e.g., for RLM/RRM or CSI), where RRC is a signaling protocol standardized by 3GPP for control and configuration signaling.

Another example scenario can arise with HetNets in which the small cells are femtocells, which operate on a Closed Subscriber Group (CSG for abbreviation) basis, and are therefore typically not open to users of the macrocellular network. In this case, the femtocells can cause strong interference to the macrocell UEs when these macrocell UEs come close to the femto base station transceivers, however, without having the possibility to associate with them. It may then be beneficial for the macrocells to indicate to their UEs the subframes in which they should make resource specific measurements, i.e. the subframes in which interference from one or more femtocells is reduced or absent. In the following, to a base station transceiver may also be referred to as eNodeB (eNB as abbreviation) according to the 3GPP terminology.

Another aspect of HetNets arises considering overlay cells, which operate at a different frequency channel or band and have an overlapping geographical coverage area. Such overlapping or overlay networks may be HetNets as well. In addition to the intra-frequency neighbouring cell RRM measurements as described above, inter-frequency neighbouring cell RRM measurements may be carried out by a UE, for example to determine or enable inter-frequency handover (HO for abbreviation).

Document R2-106449, 3GPP TSG RAN WG2 Meeting #72, November 15-19, 2010, Jacksonville, USA, discusses signaling requirements for HetNet scenarios. Different scenarios as Macro-Pico and Macro-Femto are considered, as well as their implications on measurements regarding RLM, RRM and CSI. Moreover, different signaling possibilities as broadcast signaling versus dedicated signaling using RRC are evaluated. The document concludes on proposing dedicated RRC signaling for providing ABS information for CSI, RLM and RRM measurements in Macro-Pico and Macro-Femto scenario.

Document R2-110172, 3GPP TSGRAN WG2 Meeting #72bis, January 17-21, 2011, Dublin, Ireland, discusses inter-frequency measurements in different HetNet scenarios, i.e. Macro-Pico and Macro-Femto network configurations. It is pointed out that Femto-Cell deployment may lead to coverage issues in an inter-frequency handover scenario. Moreover it is shown, that load balancing and inter-frequency handover may be difficult to control on the Macro-Pico scenario. The complexity of the introduction of inter-frequency measurement restrictions into Release 10 of the 3GPP specifications is discussed.

Document R2-106453, 3GPP TSG RAN WG2 Meeting #72, November 15-19, 2010, Jacksonville, USA, proposes to use dedicated RRC signaling to be used for signaling ABS patterns to the corresponding RRC connected UEs. The document addresses the scenario, wherein a picocell experiences interference of from multiple macrocells with different ABS patterns. It is proposed to signal multiple patterns for ABS restrictions on CQI measurements.

### Summary

Embodiments of the present invention may be based on a finding that inter-frequency measurements can be effected by ICIC. For example, when a mobile transceiver, which is associated to a cell operative at a first frequency channel, carries out measurements on signals of a cell operative at a second frequency channel, which is different from the first frequency channel, then ICIC being active between the cells of the second frequency channel may influence the measurement results. For instance, RRM measurements may be impacted by the introduction of the ABS concept.

Embodiments may be based on a finding that in order to have more accurate inter-frequency RRM measurements and to have more efficient inter-frequency HO, the UE can be informed of the use of a resource restriction on inter-frequency measurements. In other words, in embodiments a mobile transceiver may be informed on certain radio resources, which shall or shall not be used for inter-frequency measurements in a different frequency channel or band.

Embodiments may provide a base station transceiver apparatus adapted for determining information on a measurement configuration for a mobile transceiver, the base station transceiver apparatus being adapted for communicating with a mobile transceiver using radio signals of a first frequency channel and having provision means adapted for providing information on a radio resource utilization of an overlay base station transceiver, the overlay base station transceiver being operative for communicating with the mobile transceiver using radio signals of a second frequency channel, the second frequency channel comprising a plurality of radio resources. The base station transceiver apparatus further comprises measurement configuration means adapted for determining a measurement configuration for measuring signals of the second frequency channel by the mobile transceiver based on the radio resource utilization of the overlay base station transceiver, the measurement configuration comprising information on radio resources of the overlay base station transceiver to be measured. The base station transceiver apparatus may further comprise communication means adapted for transmitting information on the measurement configuration to the mobile transceiver.

Correspondingly, embodiments may provide a mobile transceiver apparatus for providing a measurement result, the mobile transceiver apparatus being adapted for communicating with a base station transceiver using radio signals of a first frequency channel and for communicating with an overlay base station transceiver using radio signals of a second frequency channel, the second frequency channel comprising a plurality of radio resources. The mobile transceiver apparatus comprises communication means adapted for receiving information on a measurement configuration from the base station transceiver, the information on the measurement configuration comprising information on radio resources used by the overlay base station transceiver to be measured. The measurement means is adapted for measuring the signals of the second frequency channel based on the information on the radio resources to determine a measurement result and the communication means is adapted for transmitting the measurement result to the base station transceiver.

In embodiments, the information on the radio resource utilization provided by the base station transceiver apparatus may comprise information on frequency and/or time resources utilized by the overlay base station transceiver in the second frequency channel. Consequently, in embodiments the information on the radio resources received at the mobile transceiver apparatus may comprise information on frequency and/or time resources utilized by the overlay base station transceiver in the second frequency channel.

Furthermore, the time resources may correspond to a plurality of subframes of a radio frame structure, wherein the information on the radio resource utilization comprises information on during which of the plurality of subframes at least some of the radio resources of the overlay base station transceiver are suspended from transmission. In embodiments of a base station transceiver, the measurement configuration means can be adapted for determining the measurement configuration for the mobile transceiver such that measurements are carried out by the mobile transceiver based on signals of the second frequency channel or band using radio resources, of which at least some are suspended from transmission by the overlay base station transceiver. Correspondingly, in an embodiment of a mobile transceiver, the measurement means can be is adapted for measuring the signals of the second frequency channel or band using radio resources used by the overlay base station transceiver of which at least some are suspended from transmission.

In other words, in embodiments the measurement configuration for the mobile transceiver may be such that the measurements are carried out by the mobile transceiver on radio signals of the second frequency channel or band during an ABS subframe of the overlay base station transceiver, i.e. during a subframe wherein the overlay cell or base station transceiver may transmit using reduced radio resources or it may not transmit at all.

In other embodiments of a base station transceiver apparatus the measurement configuration means can be adapted for determining the measurement configuration for the mobile transceiver such that measurements are carried out by the mobile transceiver based on signals of the second frequency channel or band using radio resources which are not suspended from transmission by the overlay base station transceiver. Accordingly, in an embodiment of the mobile transceiver apparatus, the measurement means can be adapted for measuring the signals of the second frequency channel using radio resources which are not suspended from transmission by the overlay base station transceiver. In other words, in embodiments the measurement configuration for the mobile transceiver may be such that the measurements are carried out by the mobile transceiver based on signals of the second frequency channel or band during a non-ABS subframe of the overlay base station transceiver, i.e. during a subframe wherein the overlay cell may transmit using regular transmission.

According to the above embodiments, embodiments can be further based on a finding that a mobile transceiver may be configured in different ways, which can be determined by the structure of the overlay network. For instance, while in some scenarios it might be advantageous to carry out the inter-frequency measurements in non-ABS subframes of an overlay cell, in other scenarios the opposite may be the case, i.e., it may be advantageous to carry out the inter-frequency measurements in ABS frames of an overlay cell. This may depend on the cell type of the overlay base station transceiver, i.e. on whether the overlay base station transceiver corresponds to a macro-, pico-, femto- or any other kind of cell. Some of these scenarios will be described subsequently in the detailed description of some embodiments.

Embodiments may be further based on a finding that multiple overlay base station transceivers may be subjected to inter-frequency measurements and that the corresponding measurements may be configured differently for the mobile transceiver, again, for instance, depending on the cell type of each individual overlay base station transceiver. In embodiments of a base station transceiver apparatus, the provision means can be adapted for providing information on a radio resource utilization of a plurality of overlay base station transceivers, the overlay base station transceivers being operative for communicating with the mobile transceiver using radio signals of one or more frequency channels or bands, which is/are different from the first frequency channel or band. In some embodiments the plurality of overlay base station transceivers may be operative for communicating in a second, i.e. in the same, frequency channel or band. In other embodiments there may be multiple overlay networks communicating using multiple different frequency channels. The measurement configuration means can be adapted for determining a plurality of measurement configurations for measuring signals of the one or more different frequency channels or bands by the mobile transceiver based on the radio resource utilization of the plurality of overlay base station transceivers, the measurement configurations comprising information on radio resources of the one or more different frequency channels to be measured. The communication means can be adapted for transmitting information on the plurality of measurement configurations to the mobile transceiver.

Hence, in embodiments of the mobile transceiver apparatus, the information on the measurement configuration may comprise information on radio resources of different frequency channels and/or a plurality of overlay base station transceivers to be measured, and the measurement means can be adapted for measuring the signals of the different frequency channels and/or the plurality of overlay base station transceivers based on the information on the radio resources to determine a plurality of measurement results. The communication means can be adapted for transmitting the plurality of measurement results to the base station transceiver.

Embodiments may also provide a method for providing information on a measurement configuration to a mobile transceiver communicating using radio signals of a first frequency channel. The method comprises a step of providing information on a radio resource utilization of an overlay base station transceiver, the overlay base station transceiver being operative for communicating with the mobile transceiver using radio signals of a second frequency channel, the second frequency channel comprising a plurality of radio resources. The method may further comprise determining a measurement configuration for measuring signals of the second frequency channel by the mobile transceiver based on the radio resource utilization of the overlay base station transceiver, the measurement configuration comprising information on radio resources of the second frequency channel to be measured. The method may further comprise transmitting the information on the measurement configuration to the mobile transceiver.

Embodiments may further provide a method for providing a measurement result in a mobile transceiver being adapted for communicating with a base station transceiver using radio signals of a first frequency channel and with an overlay base station transceiver of an overlay network using radio signals of a second frequency channel, the second frequency channel comprising a plurality of radio resources. The method comprises receiving information on a measurement configuration from the base station transceiver, the information on the measurement configuration comprising information on radio resources of the second frequency channel to be measured. The method may further comprise measuring the signals of the second frequency channel based on the information on the radio resources to determine a measurement result and transmitting the measurement result to the base station transceiver. Embodiments may further comprise a computer program having a program code for performing one of the above methods when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Figure 1a shows an embodiment of a base station transceiver apparatus;
Figure 1b shows an embodiment of a mobile transceiver apparatus;
Figure 2 shows a schematic representation of an interference scenario in an overlay HetNet;
Figure 3 shows another schematic representation of an interference scenario in an overlay HetNet;
Figure 4 shows a schematic representation of embodiments in a cell with an overlay HetNet;
Figure 5 shows another schematic representation of embodiments in a cell with an overlay HetNet;
Figure 6 illustrates an RRC IE according to an embodiment;
Figure 7a illustrates a flow chart of an embodiment of a method for providing information on a measurement configuration; and
Figure 7b illustrates a flow chart of an embodiment of a method for providing a measurement result.

### Description of some detailed Embodiments

The illustrative description of the embodiments will be given in details combined with the appended figures. For the ease of understanding, some technical terms are explained first:
A picocell is a wireless communication system or base station typically covering a small area, such as in-building (offices, shopping malls, train stations, etc.), or more recently in-aircraft. A femtocell is a small cellular base station, typically designed for use in a home or small business. A macrocell is a cell in a mobile phone network that provides radio coverage served by a power cellular base station (tower). Generally, macrocells provide coverage larger than picocells and/or femtocells. The antennas for macrocells are mounted on ground-based masts, rooftops and other existing structures, at a height that can provide a clear view over the surrounding buildings and terrain. Macrocell base stations have power outputs of typically tens of watts.

Heterogeneous networks may also comprise wireless networks using different access technologies. For example, a wireless network which provides a service through a wireless local area network (WLAN for abbreviation) and is able to maintain the service when switching to a cellular network is called a wireless heterogeneous network.

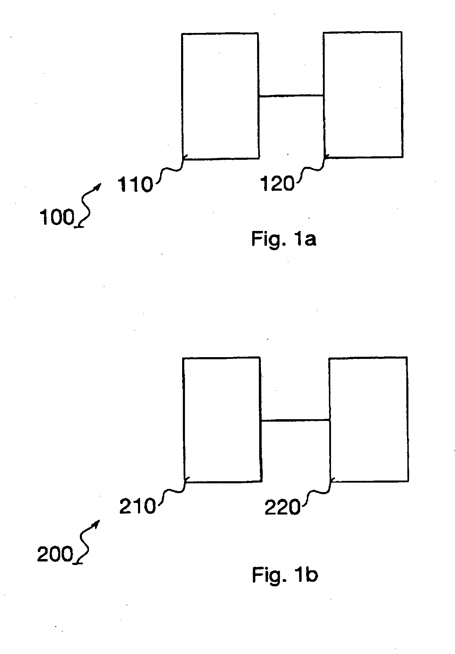

Figure 1a shows an embodiment of a base station transceiver apparatus 100, wherein the base station transceiver apparatus 100 is to be understood as an apparatus which may be deployed in or coupled with a base station or a base station transceiver.

The base station transceiver apparatus 100 is adapted for determining information on a measurement configuration for a mobile transceiver. The base station transceiver apparatus 100 is also adapted for communicating with a mobile transceiver using radio signals of a first frequency channel or band. For that purpose the base station transceiver may modulate a carrier or center frequency of the first frequency band accordingly. The base station transceiver apparatus 100 comprises provision means 110 adapted for providing information on a radio resource utilization of an overlay base station transceiver, the overlay base station transceiver being operative for communicating with the mobile transceiver using radio signals of a second frequency channel or band, the second frequency channel comprising a plurality of radio resources. The base station transceiver apparatus 100 further comprises measurement configuration means 120 adapted for determining a measurement configuration for measuring signals of the second frequency channel by the mobile transceiver based on the radio resource utilization of the overlay base station transceiver, the measurement configuration comprising information on radio resources used by the overlay base station transceiver to be measured. The base station transceiver apparatus 100 may further comprise communication means being adapted for transmitting information on the measurement configuration to the mobile transceiver. The base station transceiver apparatus 100 may correspond to an apparatus for an LTE or LTE-A conformant base station transceiver, i.e. it may correspond to an apparatus for use in an eNB.

The provision means 110 may be implemented in different ways. In some embodiment it may comprise interfacing means being adapted for receiving information on the radio resource utilization of an overlay base station transceiver from a network entity, such as a controller or another base station transceiver or the overlay base station transceiver. In an LTE or LTE-A scenario the X2 interface may be utilized for providing such information. In embodiments, the base station transceiver apparatus 100 may therefore be adapted for providing information on a radio resource utilization of its own frequency channel or band to other base station transceivers. In some embodiments the provision means 110 may correspond to some memory device where the information on the resource utilization is stored, e.g. being programmed by some other device or even preconfigured during the installation of the base station transceiver apparatus.

Figure 1b shows an embodiment of a mobile transceiver apparatus 200, wherein the mobile transceiver apparatus 200 is to be understood as an apparatus which may be deployed in or coupled with a mobile terminal or a mobile transceiver.

The mobile transceiver apparatus 200 is adapted for providing a measurement result, for communicating with a base station transceiver of a wireless network using radio signals of a first frequency channel and for communicating with an overlay base station transceiver of a wireless overlay network using radio signals of a second frequency channel, the second frequency channel comprising a plurality of radio resources, such as, e.g., radio frames, subframes and/or time slots thereof, sub-carriers of the second frequency channel, orthogonal coding schemes, etc. The mobile transceiver apparatus 200 comprises communication means 210 adapted for receiving information on a measurement configuration from the base station transceiver, the information on the measurement configuration comprising information on radio resources used by the overlay base station transceiver to be measured. The mobile transceiver apparatus 200 further comprises measurement means 220 being adapted for measuring the signals of the second frequency channel based on the information on the radio resources to determine a measurement result. The communication means 210 can be adapted for transmitting the measurement result to the base station transceiver. In one embodiment the mobile transceiver apparatus 200 may correspond to an apparatus for an LTE or LTE-A conformant mobile transceiver.

In an embodiment of the base station transceiver apparatus 100 the information on the radio resource utilization may comprise information on frequency and/or time resources utilized by the overlay base station transceiver in the second frequency channel. Correspondingly, in an embodiment of the mobile transceiver apparatus 200 the information on the radio resources may comprise information on frequency and/or time resources utilized by the overlay base station transceiver in the second frequency channel. In further embodiments the information on the radio resources may additionally or alternatively comprise information to indicate a coding scheme utilized by the overlay base station transceiver for a spread-spectrum signaling such as, for example, in code division multiple access (CDMA) methods used by various radio communication technologies.

Moreover, in an embodiment of the base station transceiver apparatus 200 the time resources can correspond to a plurality of subframes of a radio frame structure, wherein the information on the radio resource utilization comprises information on during which of the plurality of subframes at least some of the radio resources of the overlay base station transceiver are suspended from transmission. In other words, the information on the radio resource utilization may correspond to information on the ABS subframes of the overlay base station transceiver. Correspondingly, in an embodiment of the mobile transceiver apparatus 200 the time resources may correspond to a plurality of subframes of a radio frame structure, wherein the information on the radio resources comprises information on during which of the plurality of subframes at least some of the radio resources of the overlay base station transceiver are suspended from transmission. In other words, the information on the radio resources may correspond to information on the ABS subframes of the overlay base station transceiver.

In embodiments the mobile transceiver apparatus 200 may carry out inter-frequency measurements through the measurement means 220. In some embodiments, for inter-frequency RRM measurements, a reference signal received quality (RSRQ for abbreviation) of the overlay base station transceiver can be used as measurement criteria. RSRQ can be defined as reference signal received power (RSRP for abbreviation) divided by the received signal strength indicator (RSSI for abbreviation), where RSRP is measured based on cell specific reference symbols (CRS for abbreviation) of the cell. For instance, in an LTE-A scenario, as the cell specific reference symbols are transmitted on both ABS and non-ABS subframes, RSRP measurement results are independent on whether they are measured based on ABS or non-ABS subfi-ames. However, RSSI is the received signal strength indicator, which represents the total received power including both the useful signal power as well as the received interference power. Even though the common signals are transmitted on both ABS and non-ABS subframes, data traffic may not be transmitted in an ABS subframe. Therefore, RSSI measurement results depend on whether a measurement is taken on ABS or non-ABS subframes. Hence, RSRQ measurement results also depend on whether the measurement is taken considering ABS or non-ABS subframes.

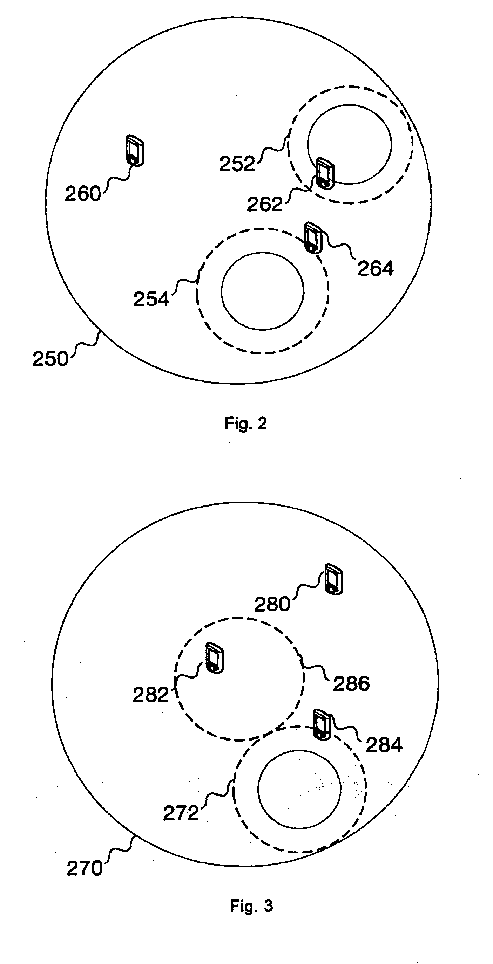

UEs or mobile transceivers close to victim cells, i.e. cells for which inter-frequency RRM measurements prior to a potential handover are carried out by a mobile terminal, may experience common channels being transmitted on ABSs, but no unicast traffic is transmitted on ABSs. In the following, a co-channel interference situation will be detailed using two example scenarios depicted in Figures 2 and 3.

Figure 2 shows a schematic representation of a co-channel or intra-frequency interference scenario in a HetNet, in which a macrocell 250, a femtocell 252 and a picocell 254 are depicted schematically, which are served by corresponding overlay base station transceivers. The cell edge areas of the femtocell 252 and the picocell 254 are indicated by the areas between the solid lines and the broken or dashed lines. Moreover, Figure 2 shows macroUEs or mobile transceivers 260, 262 and 264. The macroUEs are associated with the macrocell 250. For the remainder it will be assumed that macroUEs are associated with macrocells, picoUEs are associated with picocells and femtoUEs are associated with femtocells. The macrocell 250, the femtocell 252 and the picocell 254 all use the same frequency band for communicating with their associated UEs. However, as explained in the introductory portion, inter-cell interference co-ordination using ABS may be employed. I.e., the macrocell 250 may use non-ABS subframes for communicating with a macroUE, while pico- and/or femtoUEs may be scheduled during ABS subframes of the macrocell in order to avoid co-channel interference in the HetNet. I.e. in order to avoid co-channel interference between the macrocell 250 and the picocell 254, the macroUE 264 close to the picocell (in the Macro-Pico scenario) should not be scheduled on ABS subframes. However, the macrocell 250 could schedule a macroUE 260 close to the macrocell 250 even on ABSs as long as the transmission does not cause co-channel interference to picoUEs, which are associated with the picocell 254, but not shown in Figure 2. From the UEs point of view, the macroUE 260 close to the macrocell 250 (or its corresponding base station transceiver) may not see any difference between ABSs or non-ABSs. Therefore, measurements taken by a UE at the position of the macroUE 260 close to the macrocell 250 or its associated base station transceiver may not see any difference on the measurement whether it is taken on ABSs or non-ABSs. However, a UE at the position of the macroUE 264 close to the picocell 254 or its associated base station transceiver may experience different RSRQ measurement results when measured on ABSs or non-ABSs, due to the different interference situation and the above described effect on the RSSI.

As illustrated in Figure 2, RRM/RSRQ measurements carried out by a UE at the position of macroUE 260 may lead to similar results independent on whether the measurements are taken on ABS or non-ABS of the macrocell 250. However, the RRM/RSRQ measurement of a UE at the position of macroUE 264 may provide different results depending on whether the ABS or non-ABSs are used for the measurements. Similarly, a UE at the position of macroUE 262 may experience differences in RRM/RSRQ measurements on ABS and non-ABS of femtocell 252.

Note, that in the scenario depicted in Figure 2 it is assumed that macrocell 250 uses a directional antenna for data transmission. Hence, the macroUE 260 can be scheduled on an ABS subframe with full power as long as the transmission doesn't affect the interference experienced by picoUEs in the picocell's boundary or edge area.

Figure 3 shows another schematic representation of a co-channel interference scenario in a HetNet. Figure 3 shows another macrocell 270 and a picocell 272, which may correspond to overlay base station transceivers operating in a common frequency band. Again, the cell boundary or cell edge area of the picocell 272 is indicated by the area between the solid line and the broken line. Moreover, Figure 3 depicts three macroUEs 280, 282, and 284. In the scenario depicted in Figure 3, macrocell 270 uses an omni-directional antenna. Therefore, data scheduled for macroUE 282 is transmitted with low power to avoid co-channel interference to the picocell 272, which is indicated by the broken line circle 286 in the center of the macrocell 270. Even though macroUE 282 can be scheduled on ABS subframe with low transmission power, macroUE 280 cannot be scheduled on ABS subframe as the transmission will cause co-channel interference to the picocell 272. Due to the differences in receive power on ABS and non-ABS subframe at the position of macroUE 280, an RSSI and RSRQ measurement taken at the position macroUE 280 provides different results depending on whether the measurement is taken on an ABS or a non-ABS subframe.

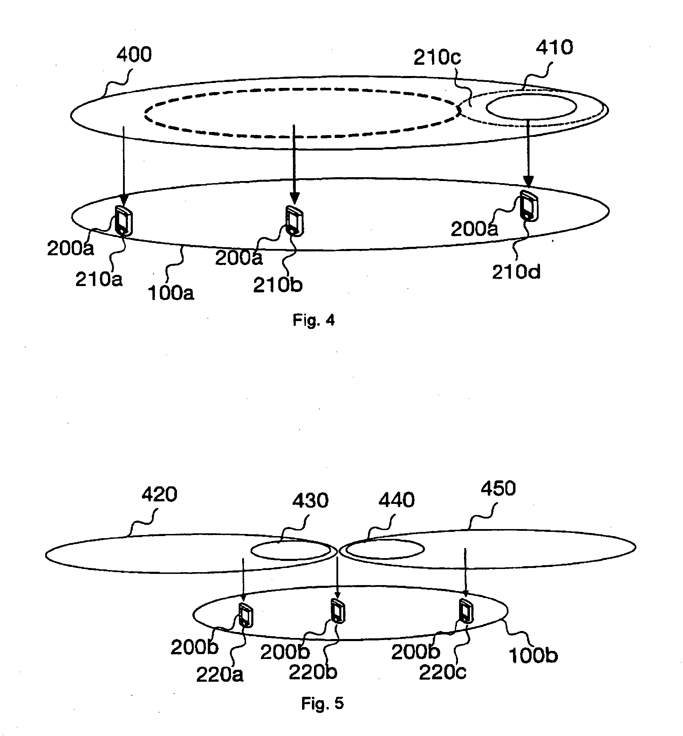

Figure 4 shows a schematic representation of embodiments in a cell with an overlay HetNet. Figure 4 shows an embodiment of a base station transceiver apparatus 100a represented by its coverage area also referred to as cell 100a. Moreover, Figure 4 depicts a first overlay base station transceiver 400 and a second overlay base station transceiver 410, both of them are also represented by their coverage areas. It is assumed that the base station transceiver apparatus 100a communicates with its associated mobile terminals using radio signals of a first frequency channel and that the overlay base station transceivers 400 and 410 communicate with their respective associated mobile terminals using radio signals of a second frequency channel, where the first and second frequency channels are different from each other, preferably even non-overlapping. Furthermore, Figure 4 illustrates an embodiment of a mobile transceiver apparatus 200a, to which it is also referred to as macroUE 200a, at four different positions 210a, 210b, 210c and 200d. These positions are positions at which the macroUE200a may take inter-frequency RRM/RSRQ measurements on the second frequency channel. The mobile transceiver apparatus 200a is assumed to be associated with the base station transceiver apparatus 100a. Note, that measurement positions 210a and 210b are located in the geographical area of the macrocell 400 while measurement positions 210c and 210d are located in the geographical area of the picocell 410. In order to keep a better overview, macroUE 200a is not shown at position 210c.

Figure 4 illustrates an inter-frequency RRM measurement scenario. The macroUE 200a is served by cell 100a with a serving frequency corresponding to the first frequency channel, while the frequency layer of the overlay HetNet using the second frequency channel is being measured by the macroUE 200a for inter-frequency RRM. It is assumed that the macrocell 400 using the second frequency channel has deployed inter-cell interference coordination using ABS as described above with reference to Figures 2 and 3. It is also assumed that the macrocell 400 using the second frequency channel uses an omni-directional antenna for scheduling the UEs associated to it, which are not shown in Figure 4. Hence, the scenario in the HetNet 400, 410 is similar to the scenario in Figure 3. Furthermore, it is assumed that the macroUE 200a takes inter-frequency RRM measurements at the positions 210a, 210b, 210c and 210d. Inter-frequency RRM measurements results taken at point 210a and 210c depend on whether a measurement has been taken on ABS or non-ABS subframes of the second frequency channel. When measurements are performed on ABS subframes, RSRQ tends to provide too-optimistic results due to a too low RSSI value compared to the actual situation during non-ABS subframes at these locations.

In other words, based on the too-optimistic measurements results, at the position 210a the macroUE 200a may handover to the macrocell 400 using the second frequency channel, prematurely. Such a handover may result in too high loads on the macrocell 400 and, hence, result in poor system performance. If the measurement at position 210c is, however, taken on ABS subframes, the result provides the picocell 410 to be the stronger cell. Hence the macroUE 200a would be handover from the base station transceiver apparatus 100a to the picocell 410, which is the more favorable behavior. Inter-frequency measurements taken by macroUE 200a at positions 210b and 210d, however, may provide similar results regardless of whether the measurements are taken on ABS or non-ABS subframes.

Embodiments may, in order to perform or obtain more accurate inter-frequency RRM/RSRQ measurements at position 210a, take said inter-frequency measurements during time intervals corresponding to non-ABS subframes. Inter-frequency RRM/RSRQ measurements at positions 210b and 210d may be taken from the macroUE 200a without a measurement resource restriction. RRM/RSRQ measurements at position 210c may be taken during time intervals corresponding to ABS subframes.

Thus, in embodiments, inter-frequency RRM/RSRQ measurements between the cell 100a and the overlay HetNet 400 at positions 210a and 210b can be taken considering the non-ABS subframes of HetNet 400, while measurements at positions 210c and 210d can be taken on ABS subframes of HetNet 400. Note, that measurement positions 210a and 210b are located in the area of macrocell 400 while measurement positions 210c and 210d are located in the area of picocell 410.

In embodiments of the base station transceiver apparatus 100a, the measurement configuration means 120 can be adapted for determining the measurement configuration for the mobile transceiver 200a such that measurements are carried out by the mobile transceiver 200a on the signals of the second frequency channel using radio resources of the overlay base station transceiver 400 which are not suspended from transmission, i.e. radio resources corresponding to the non-ABS subframes of the overlay base station transceiver 400, and taking RRM measurements related to a received signal quality of the base station transceiver 400. Accordingly, in embodiments of the mobile transceiver apparatus 200a, the measurement means 220 can be adapted for measuring the signals of the second frequency channel using radio resources which are not suspended from transmission by the overlay base station transceiver 400, i.e. radio resources corresponding to the non-ABS subframes of the overlay base station transceiver 400. Such embodiments correspond to the case where the mobile transceiver apparatus 200a being associated to cell 100a takes RRM inter-frequency measurements related to a received signal quality of the base station transceiver serving the overlay HetNet macrocell 400.

In embodiments of the base station transceiver apparatus 100a, the measurement configuration means 120 can be adapted for determining the measurement configuration for the mobile transceiver 200a such that measurements are carried out by the mobile transceiver 200a on the signals of the second frequency channel using radio resources of overlay base station transceiver 400 of which at least some are suspended from transmission, e.g. corresponding to the ABS subframes of the overlay base station transceiver 400 and for taking RRM measurements for the overlay base station transceiver 410. In embodiments of the mobile transceiver apparatus 200a, the measurement means 220 can also be adapted for measuring the signals of the second frequency channel using radio resources used by the overlay base station transceiver 400 of which at least some are suspended from transmission, e.g. corresponding to the ABS subframes of the overlay base station transceiver 400 and for more accurately measuring the signals of overlay base station transceiver 410. Such embodiments correspond to the case where the mobile transceiver apparatus 200a being associated to cell 100a takes RRM inter-frequency measurements related to a received signal quality of the base station transceiver serving the overlay HetNet picocell 410.

In embodiments, resource restriction may be signaled from the base station transceiver apparatus 100a to the mobile transceiver apparatus 200a. In LTE or LTE-A conformant embodiments, this may involve multiple measurement resource restrictions to be signaled to the macroUE 200a for inter-frequency RRM measurements. In further embodiments, it is possible to have multiple picocells located within the same macrocell coverage area. Thus the same ABS pattern of the macrocell may be used by all the picocells in the macrocell coverage area. In such embodiments, a measurement resource restriction, e.g. related to the usage of ABS or non-ABS subframes for performing the inter-frequency measurement, may be valid for a group of cells. Thus, the measurement resource restrictions may be provided with a list of cells to which the restriction applies to.

Therefore, in embodiments of the base station transceiver apparatus 100a the provision means 110 can be adapted for providing information on a radio resource utilization of a plurality of overlay base station transceivers 400, 410, the overlay base station transceivers 400, 410 being operative for communicating with the mobile transceiver using radio signals of one or more frequency channels, which is/are different from the first frequency channel. In other words, the plurality of overlay base station transceivers may be operative in one frequency channel, e.g. the above second frequency channel, or the plurality of overlay base station transceivers may be operative in multiple different frequency channels, respectively.

The measurement configuration means 120 can be adapted for determining a plurality of measurement configurations for measuring signals of the one or more different frequency channels by the mobile transceiver based on the radio resource utilization, e.g. the ABS or non-ABS subframe utilization, of the plurality of overlay base station transceivers 400, 410, the measurement configurations comprising information on radio resources, e.g. the ABS or non-ABS subframes, of the one or more frequency channels to be measured.

Accordingly, in embodiments of the mobile transceiver apparatus 200a, the information on the measurement configuration may comprise information on radio resources, e.g. the ABS or non-ABS subframes, of different frequency channels and/or a plurality of overlay base station transceivers 400, 410 to be measured. The measurement means 220 can be adapted for measuring the signals of the different frequency channels and/or of the plurality of overlay base stations 400, 410 based on the information on the radio resources to determine a plurality of measurement results.

Figure 5 shows another schematic representation of embodiments in a cell with an overlay HetNet. Figure 5 shows an embodiment of the base station transceiver apparatus denoted as macrocell 100b and an embodiment of the mobile transceiver apparatus denoted as macroUE 200b at three different measurement locations 220a, 220b and 220c. It is assumed that the macroUE 200b is associated with the macrocell 100b using a first frequency channel or band. Moreover, Figure 5 illustrates an overlay HetNet comprised of (from left to right) a first macrocell 420, a first picocell 430, a second picocell 440 and a second macrocell 450. First picocell 430 lies in the coverage area of first macrocell 420, second picocell 440 lies in the coverage are of second macrocell 450. All four cells 420, 430, 440, 450 of the overlay HetNet are located next to the center of macrocell 100b with their boundary areas.

As can be seen from Figure 5, it is possible to have more than one inter-frequency macrocell 420, 450 overlapping the serving macrocell 100b coverage area. These inter-frequency macrocells 420 and 450 may or may not deploy the same ABS pattern. Therefore, to cover for all the possible scenarios, in some embodiments, inter-frequency measurement restriction signaling, i.e. the information on the measurement configuration can be designed such that it comprises information on one of or a combination of the group of the following elements.

In some embodiments the information on the measurement configuration may comprise a number of or a list of measurement resource restrictions corresponding to a number or a list of cells or base station transceivers. For example, for a first frequency channel to be measured or a first inter-frequency measurement between a currently used frequency channel and the first frequency channel, a first measurement resource restriction together with a first list of cells, to which it applies to, may be comprised in the information on the measurement configuration. The information on the measurement configuration may further comprise a second measurement resource restriction together with a second list of cells, to which the second measurement resource restriction applies to, and a third measurement resource restriction together with a third list of cells the third measurement resource restriction applies to. Moreover, for a second measurement frequency channel or a second inter-frequency measurement between the currently used frequency channel and the second measurement frequency channel, a first measurement resource restriction together with a first list of cells it applies to may be comprised in the information on the measurement configuration. The information on the measurement configuration may further comprise for the second measurement frequency channel or the second inter-frequency a second measurement resource restriction together with a second list of cells the second measurement resource restriction applies to and a third measurement resource restriction together with a third list of cells the third measurement resource restriction applies to, etc.

For a better understanding, the signaling and the information on the inter-frequency measurement configuration will be explained below. Referring to Figure 4, in order to enable improved inter-frequency RRM/RSRQ measurements at position 210a, measurements should be carried out on non-ABS subframes, while inter-frequency RRM/RSRQ measurements at positions 210c and 210d should be carried out on ABS subframes. However, if the measurements at positions 210c and 210d were taken on non-ABS subframes, the measurement results at position 210d would not be different. The inter-frequency RRM/RSRQ measurement results at position 210c, however, would be biased towards the macrocell 400. Hence the macroUE would be handed over to macrocell 400 instead of picocell 410, both using the second frequency channel or band. Upon the handover to macrocell 400, the UE could be offloaded to the picocell 410 by the macrocell 400. In such a case, i.e. handover from macrocell 400 to picocell 410, system performance may not take a significant impact. Hence, in some embodiments, as a signaling optimization, all the cells 410 within the macrocell 400 coverage area may also be measured on non-ABS subframes of the macrocell 400.

In embodiments, the number of non-ABS subframes may be much higher than the number of ABS subframes, as it is e.g. the case in a practical LTE or LTE-A deployment. Therefore, embodiments may configure a common set of non-ABS patterns for all the macrocells in one frequency layer or frequency channel. In other words, embodiments may utilize only one measurement resource restriction for cells in one frequency layer or frequency channel.

Therefore, in another embodiment, the information on the measurement configuration may comprise measurement resource restrictions per frequency channel using only a single list of cells or base station transceivers to which the restriction applies. For example, for a first measurement frequency channel or a first inter-frequency measurement between a currently used frequency channel and the first measurement frequency channel, a first measurement resource restriction together with a single list of cells to which it applies may be comprised in the information on the measurement configuration. For a second measurement frequency channel or a second inter-frequency measurement between the currently used frequency channel and the second measurement frequency channel, a second measurement resource restriction together with a single list of cells to which it applies may be comprised in the information on the measurement configuration, etc.

Therefore, in another embodiment, the information on the measurement configuration may comprise measurement resource restrictions per frequency channel, where the same restrictions are applied to all cells or base station transceivers of the frequency layer. For example, for a first measurement frequency channel or a first inter-frequency measurement between a currently used frequency channel and the first measurement frequency channel, a first measurement resource restriction may be comprised in the information on the measurement configuration. For a second measurement frequency channel or a second inter-frequency measurement between the currently used frequency channel and the second measurement frequency channel, a second measurement resource restriction may be comprised in the information on the measurement configuration, etc.

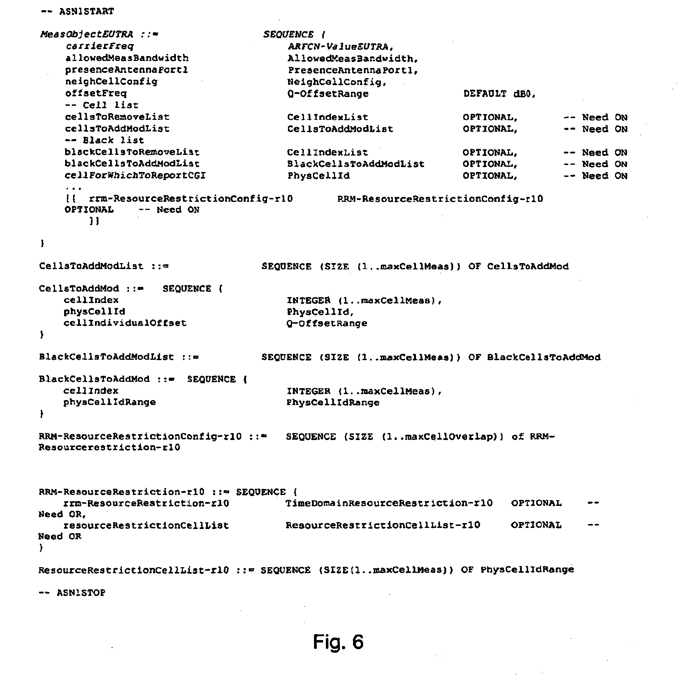

In embodiments, either broadcast signaling or dedicated RRC signaling can be used for signaling of inter-frequency measurement resource restrictions. One possible structure for inter-frequency measurement resource restriction in an embodiment is exemplified in Figure 6 using an information element (IE for abbreviation) given in abstract syntax notation one (ASN.1 for abbreviation). Here, a number of measurement resource restrictions are signaled to the UE for the same inter-frequency. First, the IE is based on a measurement object defined for the enhanced - universal mobile telecommunication system terrestrial radio access network (E-UTRA for abbreviation) and termed "MeasObjectEUTRA" in Figure 6. An optional information on the RRM resource restriction is added as highlighted and termed "rrm-ResourceRestrictionConfig-r10" for which a data type termed "RRM-ResourceRestrictionConfig-r10" may be defined and which can be provided as a sequence for a number or list of cells. In this embodiment the data type definition is also highlighted and can be a sequence of an "rrm-ResourceRestriction-r10" defined as of type "TimeDomainResourceRestriction-r10", and "resourceRestrictionCellList" defined as of type "ResourceRestrictionCellList-r10", where "ResourceRestrictionCellList-r10" can be a sequence of "PhysCellIdRange". Note that this embodiment is just given as an example, obviously many different ways or formats are conceivable for communicating the information in question. Some details of the above embodiment are provided in the subsequent table giving descriptions of the fields shown in the measurement object on Figure 6.

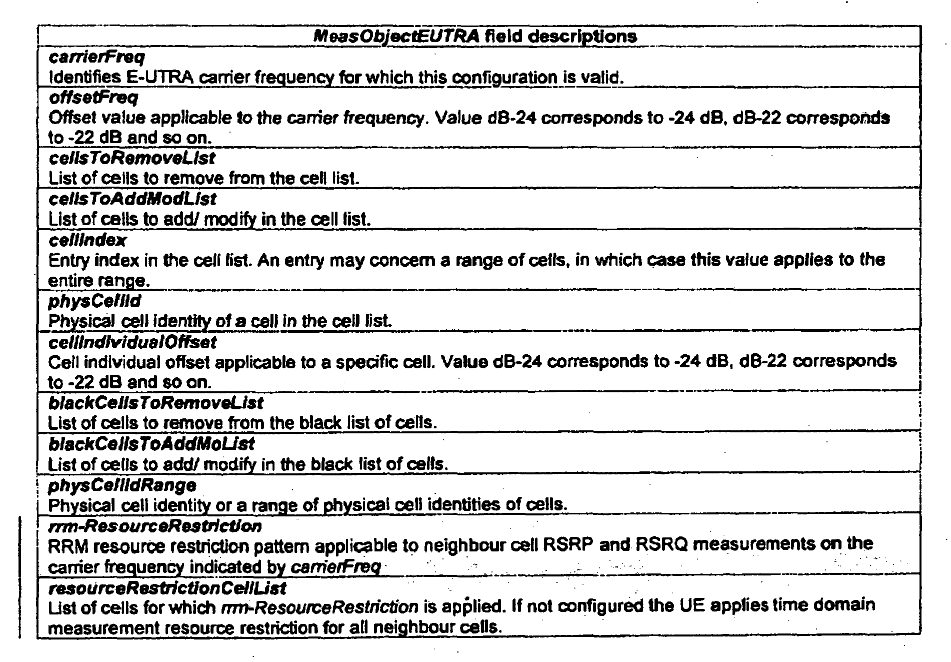

As the above already indicated, embodiments may comprise design of the signaling to inform Rel-10 UEs of the subframes in which they should run certain resource-specific operations, such as RRM and/or RLM and/or CSI measurement. So far, RRC signaling design to inform the UEs of the resource restriction requirement on inter-frequency RRM measurements is not available.

Therefore, embodiments may propose some new RRC signaling to inform the UEs about the subframes on which they should perform resource specific inter-frequency RRM measurement. Embodiments can be adapted for different scenarios as already mentioned above. For example, embodiments may provide RRC signaling (information on measurement configuration) from a serving cell (base station transceiver apparatus 100,100a,100b) to UEs (mobile transceiver apparatus 100,100a,100b) in relation to resource restriction on inter-frequency RRM measurement with respect to ABSs of inter-frequency neighbor macrocell (overlay base station transceiver 400-450). Moreover, embodiments may provide RRC signaling (information on measurement configuration) from a serving cell (base station transceiver apparatus 100,100a,100b) to UEs (mobile transceiver apparatus 100,100a,100b) in relation to resource restriction on inter-frequency RRM measurement with respect to ABSs of inter-frequency femtocell (overlay base station transceiver 400-450).

Note, in embodiments the RRC signaling design can be independent of the cell type (i.e. macro-, femto- or picocell) and the UE or mobile transceiver apparatus may not identify the cell type of serving or neighboring cell. Embodiments may provide RRC signaling to inform UEs of the subframes in which they should run certain resource restrictions on inter-frequency RRM measurements. Embodiments are not limited to specific overlay scenarios. Embodiments have been described in terms of a macro-eNB / pico-eNB scenario, but it should be understood that they may applies equally to a femto-eNB / macro-eNB scenario, or any other scenario as explained above.

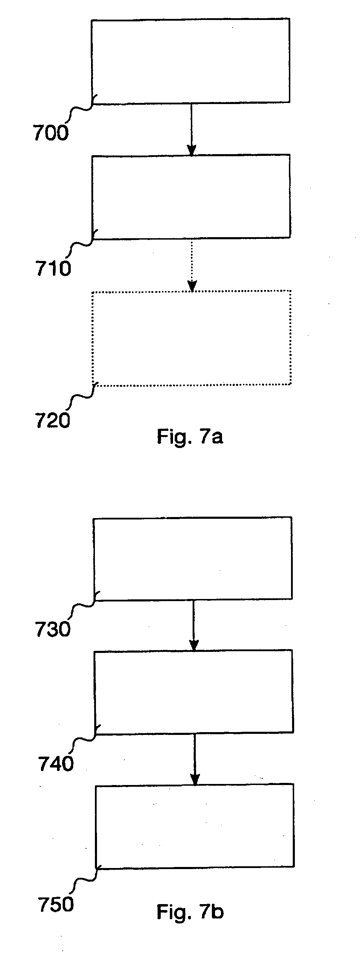

Embodiments may also comprise the above methods, which will be explained using Figures 7a and 7b. Figure 7a illustrates a flow chart of an embodiment of a method for providing information on a measurement configuration. The method for providing information on a measurement configuration to a mobile transceiver communicating using radio signals of a first frequency channel, comprises a step 700 of providing information on a radio resource utilization of an overlay base station transceiver, the overlay base station transceiver being operative for communicating with the mobile transceiver using radio signals of a second frequency channel or band, the second frequency channel comprising a plurality of radio resources. The method further comprises a step 710 for determining a measurement configuration for measuring signals of the second frequency channel by the mobile transceiver based on the radio resource utilization of the overlay base station transceiver, the measurement configuration comprising information on radio resources of the second frequency channel to be measured. The method may further comprise a step 720, which is an optional step as indicated by the broken lines in Figure 7a, of transmitting information on the measurement configuration to the mobile transceiver.

Figure 7b illustrates a flow chart of an embodiment of a method for providing a measurement result. The method for providing a measurement result in a mobile transceiver being adapted for communicating with a base station transceiver using radio signals of a first frequency channel and with an overlay base station transceiver using radio signals of a second frequency channel, the second frequency channel comprising a plurality of radio resources, comprises a step 730 of receiving information on a measurement configuration from the base station transceiver, the information on the measurement configuration comprising information on radio resources of the second frequency channel to be measured. The method further comprises a step 740 of measuring the signals of the second frequency channel based on the information on the radio resources to determine a measurement result and a step 750 of transmitting the measurement result to the base station transceiver.

Moreover, embodiments may provide a computer program having a program code for performing one of the above described methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "means", "provision means", "configuration means", "communication means", "measurement means", or "configuration means", may be provided through the use of dedicated hardware, as e.g. a processor, a controller, a transceiver, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A base station transceiver apparatus (100;100a;100b) adapted for determining information on a measurement configuration for a mobile transceiver (200;200a;200b), the base station transceiver apparatus (100;100a;100b) being adapted for communicating with the mobile transceiver (200;200a;200b) using radio signals of a first frequency channel and having
provision means (110) adapted for receiving information on a radio resource utilization of an overlay base station transceiver (400-450), the overlay base station transceiver (400-450) being operative for communicating with the mobile transceiver (200;200a;200b) using radio signals of a second frequency channel being different from the first frequency channel, the second frequency channel comprising a plurality of radio resources; and
measurement configuration means (120) adapted for determining a measurement configuration for measuring signals of the second frequency channel by the mobile transceiver (200;200a;200b) based on the information on the radio resource utilization of the overlay base station transceiver (400-450), the measurement configuration comprising information on radio resources used by the overlay base station transceiver (400-450) to be measured,
wherein the information on the radio resource utilization comprises information on time resources utilized by the overlay base station transceiver (400-450) in the second frequency channel,
wherein the time resources correspond to a plurality of subframes of a radio frame structure, wherein the information on the radio resource utilization comprises information on during which of the plurality of subframes at least some of the radio resources of the overlay base station transceiver (400-450) are suspended from transmission,
wherein the measurement configuration means (120) is adapted for:
determining the measurement configuration for the mobile transceiver (200;200a;200b) such that measurements are carried out by the mobile transceiver (200;200a;200b) on the signals of the second frequency channel using radio resources, which are not suspended from transmission by the overlay base station transceiver (400-450), or
determining the measurement configuration for the mobile transceiver (200;200a;200b) such that measurements are carried out by the mobile transceiver (200;200a;200b) on the signals of the second frequency channel using radio resources used by the overlay base station transceiver (400-450) of which at least some are suspended from transmission.

2. The base station transceiver apparatus (100;100a;100b) of claim 1, wherein the information on the radio resource utilization comprises information on frequency resources utilized by the overlay base station transceiver (400-450) in the second frequency channel and/or wherein the information on the measurement configuration comprises a first measurement resource restriction together with a first list of base station transceivers, to which the first measurement restriction applies, and a second measurement resource restriction together with a second list of base station transceivers, to which the second measurement resource restriction applies.

3. The base station transceiver apparatus (100;100a;100b) of claim 1, wherein the provision means (110) is adapted for providing information on a radio resource utilization of a plurality of overlay base station transceivers (400-450), the overlay base station transceivers (400-450) being operative for communicating with the mobile transceiver (200;200a;200b) using radio signals of one or more frequency channels, which is/are different from the first frequency channel, and wherein the measurement configuration means (120) is adapted for determining a plurality of measurement configurations for measuring, by the mobile transceiver (200; 200a; 200b), signals of the one or more different frequency channels based on the radio resource utilization of the plurality of overlay base station transceivers (400-450), the measurement configurations comprising information on radio resources of the one or more frequency channels to be measured.

4. A mobile transceiver apparatus (200;200a;200b) adapted for providing a measurement result, the mobile transceiver apparatus (200;200a;200b) being adapted for communicating with a base station transceiver (100;100a;100b) using radio signals of a first frequency channel and for communicating with an overlay base station transceiver (400-450) using radio signals of a second frequency channel being different from the first frequency channel, the second frequency channel comprising a plurality of radio resources, the mobile transceiver apparatus (200;200a;200b) comprising:
communication means (210) adapted for receiving information on a measurement configuration from the base station transceiver (100;100a;100b), the information on the measurement configuration comprising information on radio resources used by the overlay base station transceiver (400-450) to be measured; and
measurement means (220) adapted for measuring signals of the second frequency channel based on the information on the radio resources to determine a measurement result,
wherein the information on the radio resources comprises information on time resources utilized by the overlay base station transceiver (400-450) in the second frequency channel,
wherein the time resources correspond to a plurality of subframes of a radio frame structure, wherein the information on the radio resources comprises information on during which of the plurality of subframes at least some of the radio resources of the overlay base station transceiver (400-450) are suspended from transmission, wherein the measurement configuration comprises information on:
measuring the signals of the second frequency channel using radio resources, which are not suspended from transmission by the overlay base station transceiver (400-450), or
measuring the signals of the second frequency channel using radio resources used by the overlay base station transceiver (400-450) of which at least some are suspended from transmission.

5. The mobile transceiver apparatus (200;200a;200b) of claim 4, wherein the information on the radio resources comprises information on frequency resources utilized by the overlay base station transceiver (400-450) in the second frequency channel, and/or wherein the information on the measurement configuration comprises a first measurement resource restriction together with a first list of base station transceivers, to which the first measurement restriction applies, and a second measurement resource restriction together with a second list of base station transceivers, to which the second measurement resource restriction applies.

6. The mobile transceiver apparatus (200;200a;200b) of claim 4, wherein the information on the measurement configuration comprises information on radio resources of different frequency channels and/or a plurality of overlay base station transceivers (400-450) to be measured, and wherein the measurement means (220) is adapted for measuring the signals of the different frequency channels and/or of the plurality of overlay base stations (400-450) based on the information on the radio resources to determine a plurality of measurement results.

7. A method for providing information on a measurement configuration to a mobile transceiver (200;200a;200b) communicating using radio signals of a first frequency channel, comprising
receiving (700) information on a radio resource utilization of an overlay base station transceiver (400-450), the overlay base station transceiver (400-450) being operative for communicating with the mobile transceiver (200;200a;200b) using radio signals of a second frequency channel being different from the first frequency channel, the second frequency channel comprising a plurality of radio resources;
determining (710) a measurement configuration for measuring signals of the second frequency channel by the mobile transceiver (200;200a;200b) based on the information on the radio resource utilization of the overlay base station transceiver (400-450), the measurement configuration comprising information on radio resources of the second frequency channel to be measured,
wherein the information on the radio resource utilization comprises information on time resources utilized by the overlay base station transceiver (400-450) in the second frequency channel,
wherein the time resources correspond to a plurality of subframes of a radio frame structure, wherein the information on the radio resource utilization comprises information on during which of the plurality of subframes at least some of the radio resources of the overlay base station transceiver (400-450) are suspended from transmission,
wherein the measurement configuration for the mobile transceiver (200;200a;200b) is adapted such that:
measurements are carried out by the mobile transceiver (200;200a;200b) on the signals of the second frequency channel using radio resources, which are not suspended from transmission by the overlay base station transceiver (400-450), or
measurements are carried out by the mobile transceiver (200;200a;200b) on the signals of the second frequency channel using radio resources used by the overlay base station transceiver (400-450) of which at least some are suspended from transmission.

8. A method for providing a measurement result in a mobile transceiver (200;200a;200b) being adapted for communicating with a base station transceiver (100;100a;100b) using radio signals of a first frequency channel and with an overlay base station transceiver (400-450) using radio signals of a second frequency channel being different from the first frequency channel, the second frequency channel comprising a plurality of radio resources, comprising:
receiving (730) information on a measurement configuration from the base station transceiver (100;100a;100b), the information on the measurement configuration comprising information on radio resources of the second frequency channel to be measured;
measuring (740) the signals of the second frequency channel based on the information on the radio resources to determine a measurement result; and
transmitting (750) the measurement result to the base station transceiver (100;100a;100b),
wherein the information on the radio resources comprises information on time resources utilized by the overlay base station transceiver (400-450) in the second frequency channel,
wherein the time resources correspond to a plurality of subframes of a radio frame structure, wherein the information on the radio resources comprises information on during which of the plurality of subframes at least some of the radio resources of the overlay base station transceiver (400-450) are suspended from transmission,
wherein the measurement configuration comprises information on:
measuring the signals of the second frequency channel using radio resources, which are not suspended from transmission by the overlay base station transceiver (400-450), or
measuring the signals of the second frequency channel using radio resources used by the overlay base station transceiver (400-450) of which at least some are suspended from transmission.

9. A computer program having a program code for performing the method of one of the claims 7 or 8 when the computer program is executed on a computer or processor.

## Patentansprüche

1. Basisstations-Transceivergerät (100; 100a; 100b), ausgelegt für das Ermitteln von Informationen über eine Messkonfiguration für einen mobilen Transceiver (200; 200a; 200b), wobei das Basisstations-Transceivergerät (100; 100a; 100b) für die Kommunikation mit dem mobilen Transceiver (200; 200a; 200b) unter Verwendung von Funksignalen eines ersten Frequenzkanals ausgelegt ist und aufweist:
Bereitstellungsmittel (110), welches für den Empfang von Informationen über eine Funkressourcennutzung eines Überlagerungsbasisstations-Transceivers (400-450) ausgelegt ist, wobei der Überlagerungsbasisstations-Transceiver (400-450) betriebsfähig ist, um unter Verwendung von Funksignalen eines zweiten Frequenzkanals, welcher sich von dem ersten Frequenzkanal unterscheidet, mit dem mobilen Transceiver (200; 200a; 200b) zu kommunizieren, wobei der zweite Frequenzkanal eine Vielzahl von Funkressourcen umfasst; und
Messkonfigurationsmittel (120), welches für das Ermitteln einer Messkonfiguration zum Messen von Signalen des zweiten Frequenzkanals durch den mobilen Transceiver (200; 200a; 200b) auf der Basis der Informationen über die Funkressourcennutzung des Überlagerungsbasisstations-Transceivers (400-450) ausgelegt ist, wobei die Messkonfiguration Informationen über die zu messenden durch den Überlagerungsbasisstations-Transceivers (400-450) genutzten Funkressourcen umfasst,
wobei die Informationen über die Funkressourcennutzung Informationen über von dem Überlagerungsbasisstations-Transceiver (400-450) in dem zweiten Frequenzkanal genutzte Zeitressourcen umfassen,
wobei die Zeitressourcen einer Vielzahl von Teilrahmen einer Funkrahmenstruktur entsprechen, wobei die Informationen über die Funkressourcennutzung Informationen darüber, während welchem der Vielzahl von Teilrahmen zumindest einige der Funkressourcen des Überlagerungsbasisstations-Transceivers (400-450) von der Übertragung suspendiert sind, umfassen,
wobei das Messkonfigurationsmittel (120) ausgelegt ist für das
Ermitteln der Messkonfiguration für den mobilen Transceiver (200; 200a; 200b), so dass die Messungen durch den mobilen Transceiver (200; 200a; 200b) auf den Signalen des zweiten Frequenzkanals unter Verwendung von Funkressourcen, die nicht von der Übertragung durch den Überlagerungsbasisstations-Transceiver (400-450) suspendiert sind, durchgeführt werden, oder
Ermitteln der Messkonfiguration für den mobilen Transceiver (200; 200a; 200b), so dass die Messungen durch den mobilen Transceiver (200; 200a; 200b) auf den Signalen des zweiten Frequenzkanals unter Verwendung von Funkressourcen, die von dem Oberlagerungsbasisstations-Transceiver (400-450) genutzt werden, von denen zumindest einige von der Übertragung suspendiert sind, durchgeführt werden.

2. Basisstations-Transceivergerät (100; 100a; 100b) nach Anspruch 1, wobei die Informationen über die Funkressourcennutzung Informationen über die von dem Überlagerungsbasisstations-Transceiver (400-450) in dem zweiten Frequenzkanal genutzten Frequenzressourcen umfassen, und/oder wobei die Informationen über die Messkonfiguration eine erste Messressourcenbeschränkung nebst einer ersten Liste von Basisstations-Transceivern, auf welche die erste Messressourcenbeschränkung anwendbar ist, und eine zweite Messressourcenbeschränkung nebst einer zweiten Liste von Basisstations-Transceivern, auf welche die zweite Messressourcenbeschränkung anwendbar ist, umfassen.

3. Basisstations-Transceivergerät (100; 100a; 100b) nach Anspruch 1, wobei das Bereitstellungsmittel (110) für das Bereitstellen von Informationen über eine Funkressourcennutzung einer Vielzahl von Überlagerungsbasisstations-Transceivern (400-450) ausgelegt ist, wobei die Überlagerungsbasisstations-Transceiver (400-450) betriebsfähig sind, um unter Verwendung von Funksignalen eines oder mehrerer Frequenzkanals/Frequenzkanäle, welche(r) sich von dem ersten Frequenzkanal unterscheidet/unterscheiden, mit dem mobilen Transceiver (200; 200a; 200b) zu kommunizieren, und wobei das Messkonfigurationsmittel (120) für das Ermitteln einer Vielzahl von Messkonfigurationen zum Messen, durch den mobilen Transceiver (200; 200a: 200b), von Signalen des einen oder mehrerer unterschiedlicher Frequenzkanäle auf der Basis der Funkressourcennutzung der Vielzahl von Übenagerungsbasisstations-Transceivern (400-450) ausgelegt ist, wobei die Messkonfigurationen Informationen über zu messende Funkressourcen, des einen oder der mehreren Frequenzkanäle umfassen.

4. Mobiles Transceiver-Gerät (200; 200a; 200b), ausgelegt für die Bereitstellung eines Messergebnisses, wobei das mobile Transceiver-Gerät (200; 200a; 200b) dazu ausgelegt ist, unter Verwendung von Funksignalen eines ersten Frequenzsignals mit einem Basisstations-Transceiver (100; 100a; 100b) und unter Verwendung von Funksignalen eines zweiten Frequenzsignals, welcher sich von dem ersten Frequenzkanal unterscheidet, mit einem Überlagerungsbasisstations- Transceiver (400-450) zu kommunizieren, wobei das mobile Transceiver-Gerät (200; 200a; 200b) umfasst:
Kommunikationsmittel (210), ausgelegt für den den Empfang von Informationen über eine Messkonfiguration von dem Basisstations-Transceiver (100; 100a; mob), wobei die Informationen über die Messkonfiguration Informationen über zu messende, von dem Überlagerungsbasisstations-Transceiver (400-450) genutzte Funkressourcen umfassen; und
Messmittel (220), ausgelegt für das Messen von Signalen des zweiten Frequenzkanals auf der Basis der Informationen über die Funkressourcen, um ein Messergebnis zu ermitteln,
wobei die Informationen über die Funkressourcen, Informationen über die von dem Überlagerungsbasisstations-Transceiver (400-450) in dem zweiten Frequenzkanal genutzten Zeitressourcen umfassen,
wobei die Zeitressourcen einer Vielzahl von Teilrahmen einer Funkrahmenstruktur entsprechen, wobei die Informationen über die Funkressourcen Informationen darüber, während welchem der Vielzahl von Teilrahmen zumindest einige der Funkressourcen des Überlagerungsbasisstations- Transceivers (400-450) von der Übertragung suspendiert sind, umfassen, wobei die Messkonfiguration Informationen über
das Messen der Signale des zweiten Frequenzkanals unter Verwendung von Funkressourcen, die nicht von der Übertragung durch den Überlagerungsbasisstations-Transceiver (400-450) suspendiert sind, oder
das Messen der Signale des zweiten Frequenzkanals unter Verwendung von von dem Überlagerungsbasisstations-Transceiver (400-450) genutzten Funkressourcen, von denen zumindest einige von der übertragung suspendiert sind,
umfasst.

5. Mobiles Transceiver-Gerät (200; 200a; 200b) nach Anspruch 4, wobei die Informationen über die Funkressourcen Informationen über von dem Überlagerungsbasisstations-Transceiver (400-450) in dem zweiten Frequenzkanal genutzte Frequenzressourcen umfassen, und/oder wobei die Informationen über die Messkonfiguration eine erste Messressourcenbeschränkung nebst einer ersten Liste von Basisstations-Transceivern, auf welche die erste Messressourcenbeschränkung anwendbar ist, und eine zweite Messressourcenbeschränkung nebst einer zweiten Liste von Basisstations-Transceivern, auf welche die zweite Messressourcenbeschränkung anwendbar ist, umfassen.

6. Mobiles Transceiver-Gerät (200; 200a; 200b) nach Anspruch 4, wobei die Informationen über die Messkonfiguration Informationen über zu messende Funkressourcen unterschiedlicher Frequenzkanäle und/oder einer Vielzahl von Überlagerungsbasisstations-Transceivern (400-450) umfassen, und wobei das Messmittel (220) für das Messen der Signale der unterschiedlichen Frequenzkanäle und/oder der Vielzahl von Überlagerungsbasisstations-Transceivern (400-450) auf der Basis der Informationen über die Funkressourcen ausgelegt ist, um eine Vielzahl von Messergebnissen zu ermitteln.

7. Verfahren zur Bereitstellung von Informationen über eine Messkonfiguration an einen mobilen Transceiver (200; 200a; 200b), welcher unter Verwendung von Funksignalen eines ersten Frequenzkanals kommuniziert, umfassend:
Empfangen (700) von Informationen über eine Funkressourcennutzung eines Überlagerungsbasisstations-Transceivers (400-450), wobei der Überlagerungsbasisstations-Transceiver (400-450) betriebsfähig ist, um unter Verwendung von Funksignalen eines zweiten Frequenzkanals, welcher sich von dem ersten Frequenzkanal unterscheidet, mit dem mobilen Transceiver (200; 200a; 200b) zu kommunizieren, wobei der zweite Frequenzkanal eine Vielzahl von Funkressourcen umfasst; und
Ermitteln (710) einer Messkonfiguration zum Messen von Signalen des zweiten Frequenzkanals durch den mobilen Transceiver (200; 200a; 200b) auf der Basis der Informationen über die Funkressourcennutzung des Überlagerungsbasisstations-Transceivers (400-450), wobei die Messkonfiguration Informationen über zu messende Funkressourcen des zweiten Frequenzkanals umfasst,
wobei die Informationen über die Funkressourcennutzung Informationen über von dem Überlagerungsbasisstations-Transceiver (400-450) in dem zweiten Frequenzkanal genutzte Zeitressourcen umfassen,
wobei die Zeitressourcen einer Vielzahl von Teilrahmen einer Funkrahmenstruktur entsprechen, wobei die Informationen über die Funkressourcennutzung Informationen darüber, während welchem der Vielzahl von Teilrahmen zumindest einige der Funkressourcen des Überlagerungsbasisstations-Transceivers (400-450) von der Übertragung suspendiert sind, umfassen,
wobei die Messkonfiguration für den mobilen Transceiver (200; 200a; 200b) derart ausgelegt ist, dass
Messungen durch den mobilen Transceiver (200; 200a; 200b) auf den Signalen des zweiten Frequenzkanals unter Verwendung von Funkressourcen, die nicht von der Übertragung durch den Überlagerungsbasisstations-Transceiver (400-450) suspendiert sind, durchgerührt werden, oder
Messungen durch den mobilen Transceiver (200; 200a; 200b) auf den Signalen des zweiten Frequenzkanals unter Verwendung von von dem Überlagerungsbasisstations-Transceiver (400-450) genutzten Funkressourcen, von denen zumindest einige von der Übertragung suspendiert sind, durchgeführt werden.

8. Verfahren zur Bereitstellung eines Messergebnisses in einem mobilen Transceiver (200; 200a; 200b), welcher für die Kommunikation mit einem Basisstations-Transceiver (100; 100a; 100b) unter Verwendung von Funksignalen eines ersten Frequenzkanals und mit einem Überlagerungsbasisstations-Transceiver (400-450) unter Verwendung von Funksignalen eines zweiten Frequenzkanals, welcher sich von dem ersten Frequenzkanal unterscheidet, ausgelegt ist, wobei der zweite Frequenzkanal eine Vielzahl von Funkressourcen umfasst, umfassend:
Empfangen (730) von Informationen über eine Messkonfiguration von dem Basisstations-Transceiver (100; 100a; 100b), wobei die Informationen über die Messkonfiguration Informationen über zu messende Funkressourcen des zweiten Frequenzkanals umfassen;
Messen (740) der Signale des zweiten Frequenzkanals auf der Basis der Informationen über die Funkressourcen, um ein Messergebnis zu ermitteln; und Übertragen (750) der Messergebnisse an den Basisstations-Transceiver (100; 100a; 100b),
wobei die Informationen über die Funkressourcen Informationen über von dem Überlagerungsbasisstations-Transceiver (400-450) in dem zweiten Frequenzkanal genutzte Zeitressourcen umfassen,
wobei die Zeitressourcen einer Vielzahl von Teifrahmen einer Funkrahmenstruktur entsprechen, wobei die Informationen über die Funkressourcennutzung Informationen darüber, während welchem der Vielzahl von Teilrahmen zumindest einige der Funkressourcen des Überlagerungsbasisstations-Transceivers (400-450) von der Übertragung suspendiert sind, umfassen,
wobei die Messkonfiguration Informationen über
das Messen der Signale des zweiten Frequenzkanals unter Verwendung von Funkressourcen, die nicht von der Übertragung durch den Überlagerungsbasisstations-Transceiver (400-450) suspendiert sind, oder
das Messen der Signale des zweiten Frequenzkanals unter Verwendung von von dem Überlagerungsbasisstations-Transceiver (400-450) genutzten Funkressourcen, von denen zumindest einige von der Übertragung suspendiert sind,
umfasst.

9. Computerprogramm mit einem Programmcode zum Durchführen des Verfahrens eines der Ansprüche 7 oder 8, wenn das Computerprogramm auf einem Computer oder Prozessor ausgeführt wind.

## Revendications

1. Appareil émetteur/récepteur de station de base (100 ; 100a ; 100b) adapté pour déterminer des informations sur une configuration de mesure pour un émetteur/récepteur mobile (200 ; 200a ; 200b), l'appareil émetteur/récepteur de station de base (100 ; 100a ; 100b) étant adapté pour communiquer avec l'émetteur/récepteur mobile (200; 200a; 200b) au moyen de signaux radio d'un premier canal de fréquences et ayant
des moyens d'approvisionnement (110) adaptés pour recevoir des informations sur une utilisation de ressources radio d'un émetteur/récepteur de station de base de recouvrement (400 à 450), l'émetteur/récepteur de station de base de recouvrement (400 à 450) permettant de communiquer avec l'émetteur/récepteur mobile (200 : 200a ; 200b) au moyen de signaux radio d'un deuxième canal de fréquences différent du premier canal de fréquences, le deuxième canal de fréquences comprenant une pluralité de ressources radio ; et
des moyens de configuration de mesure (120) adaptés pour déterminer une configuration de mesure pour mesurer des signaux du deuxième canal de fréquences par l'émetteur/récepteur mobile (200 ; 200a ; 200b) en fonction des informations sur l'utilisation de ressources radio de l'émetteur/récepteur de station de base de recouvrement (400 à 450), la configuration de mesure comprenant des informations sur les ressources radio utilisées par l'émetteur/récepteur de station de base de recouvrement (400 à 450) à mesurer,
les informations sur l'utilisation de ressources radio comprenant des informations sur des ressources de temps utilisées par l'émetteur/récepteur de station de base de recouvrement (400 à 450) dans le deuxième canal de fréquences,
les ressources de temps correspondant à une pluralité de sous-trames d'une structure de trame radio, les informations sur l'utilisation de ressources radio comprenant des informations sur la pluralité de sous-trames durant lesquelles la transmission d'au moins certaines des ressources radio de l'émetteur/récepteur de station de base de recouvrement (400 à 450) est suspendue,
les moyens de configuration de mesure (120) étant adaptés pour l'étape suivante :
déterminer la configuration de mesure pour l'émetteur/récepteur mobile (200 ; 200a ; 200b) de sorte que les mesures soient réalisées par l'émetteur/récepteur mobile (200 ; 200a ; 200b) sur les signaux du deuxième canal de fréquences au moyen des ressources radio, dont la transmission n'est pas suspendue par l'émetteur/récepteur de station de base de recouvrement (400 à 450), ou
déterminer la configuration de mesure pour l'émetteur/récepteur mobile (200 ; 200a ; 200b) de sorte que les mesures soient réalisées par l'émetteur/récepteur mobile (200 ; 200a ; 200b) sur les signaux du deuxième canal de fréquences au moyen des ressources radio utilisées par l'émetteur/récepteur de station de base de recouvrement (400 à 450), la transmission d'au moins certaines d'entre-elles étant suspendue.

2. Appareil émetteur/récepteur de station de base (100; 100a; 100b) selon la revendication 1, dans lequel les informations sur l'utilisation de ressources radio comprennent des informations sur des ressources de fréquence utilisées par l'émetteur/récepteur de station de base de recouvrement (400 à 450) dans le deuxième canal de fréquences et/ou dans lequel les informations sur la configuration de mesure comprennent une première limitation de ressource de mesure avec une première liste d'émetteurs-récepteurs de station de base, auxquels la première limitation de mesure s'applique, et une deuxième limitation de ressource de mesure avec une deuxième liste d'émetteurs-récepteurs de station de base, auxquels la deuxième limitation de ressource de mesure s'applique.

3. Appareil émetteur/récepteur de station de base (100; 100a; 100b) selon la revendication 1, dans lequel les moyens d'approvisionnement (110) sont adaptés pour fournir des informations sur une utilisation de ressources radio d'une pluralité d'émetteurs-récepteurs de station de base de recouvrement (400 à 450), les émetteurs-récepteurs de station de base de recouvrement (400 à 450) permettant de communiquer avec l'émetteur/récepteur mobile (200 ; 200a ; 200b) au moyen de signaux radio d'un ou de plusieurs canaux de fréquences, qui est/sont différent(s) du premier canal de fréquences, et dans lequel les moyens de configuration de mesure (120) sont adaptés pour déterminer une pluralité de configurations de mesure pour mesurer, par l'émetteur/récepteur mobile (200 ; 200a ; 200b), des signaux du ou des canaux de fréquences différents en fonction de l'utilisation de ressources radio de la pluralité d'émetteurs-récepteurs de station de base de recouvrement (400 à 450), les configurations de mesure comprenant des informations sur les ressources radio du ou des canaux de fréquences à mesurer.

4. Appareil émetteur/récepteur mobile (200 ; 200a ; 200b) adapté pour fournir un résultat de mesure, l'appareil émetteur/récepteur mobile (200 ; 200a ; 200b) étant adapté pour communiquer avec un émetteur/récepteur de station de base (100 ; 100a ; 100b) au moyen de signaux radio d'un premier canal de fréquences et pour communiquer avec un émetteur-récepteur de station de base de recouvrement (400 à 450) au moyen de signaux radio d'un deuxième canal de fréquences différent du premier canal de fréquences, le deuxième canal de fréquences comprenant une pluralité de ressources radio, l'appareil émetteur/récepteur mobile (200 ; 200a ; 200b) comprenant :
des moyens de communication (210) adaptés pour recevoir des informations sur une configuration de mesure à partir de l'émetteur/récepteur de station de base (100 ; 100a ; 100b), les informations sur la configuration de mesure comprenant des informations sur les ressources radio utilisées par l'émetteur-récepteur de station de base de recouvrement (400 à 450) à mesurer ; et
des moyens de mesure (220) adaptés pour mesurer des signaux du deuxième canal de fréquences en fonction des informations sur les ressources radio pour déterminer un résultat de mesure,
dans lequel les informations sur les ressources radio comprennent des informations sur des ressources de temps utilisées par l'émetteur/récepteur de station de base de recouvrement (400 à 450) dans le deuxième canal de fréquences,
dans lequel les ressources de temps correspondent à une pluralité de sous-trames d'une structure de trame radio, dans lequel les informations sur les ressources radio comprennent des informations sur la pluralité de sous-trames durant lesquelles la transmission d'au moins certaines des ressources radio de l'émetteur/récepteur de station de base de recouvrement (400 à 450) est suspendue, dans lequel la configuration de mesure comprend des informations sur :
la mesure des signaux du deuxième canal de fréquences au moyen des ressources radio, dont la transmission n'est pas suspendue par l'émetteur/récepteur de station de base de recouvrement (400 à 450), ou
la mesure des signaux du deuxième canal de fréquences au moyen des ressources radio utilisées par l'émetteur/récepteur de station de base de recouvrement (400 à 450), la transmission d'au moins certaines d'entre-elles étant suspendue.

5. Appareil émetteur/récepteur mobile (200 ; 200a ; 200b) selon la revendication 4, dans lequel les informations sur les ressources radio comprennent des informations sur des ressources de fréquence utilisées par l'émetteur/récepteur de station de base de recouvrement (400 à 450) dans le deuxième canal de fréquences, et/ou dans lequel les informations sur la configuration de mesure comprennent une première limitation de ressource de mesure avec une première liste d'émetteurs-récepteurs de station de base, auxquels la première limitation de mesure s'applique, et une deuxième limitation de ressource de mesure avec une deuxième liste d'émetteurs-récepteurs de station de base, auxquels la deuxième limitation de ressource de mesure s'applique.

6. Appareil émetteur/récepteur mobile (200 ; 200a ; 200b) selon la revendication 4, dans lequel les informations sur la configuration de mesure comprennent des informations sur les ressources radio de canaux de fréquences différents et/ou d'une pluralité d'émetteurs/récepteurs de station de base de recouvrement (400 à 450) à mesurer, et dans lequel les moyens de mesure (220) sont adaptés pour mesurer les signaux des canaux de fréquences différents et/ou de la pluralité de stations de base de recouvrement (400 à 450) en fonction des informations sur les ressources radio pour déterminer une pluralité de résultats de mesure.

7. Procédé pour fournir des informations sur une configuration de mesure à un émetteur/récepteur mobile (200 ; 200a ; 200b) communiquant au moyen de signaux radio d'un premier canal de fréquences, comprenant les étapes suivantes
recevoir (700) des informations sur une utilisation de ressources radio d'un émetteur/récepteur de station de base de recouvrement (400 à 450), l'émetteur/récepteur de station de base de recouvrement (400 à 450) permettant de communiquer avec l'émetteur/récepteur mobile (200 ; 200a ; 200b) au moyen de signaux radio d'un deuxième canal de fréquences différent du premier canal de fréquences, le deuxième canal de fréquences comprenant une pluralité de ressources radio ;
déterminer (710) une configuration de mesure pour mesurer des signaux du deuxième canal de fréquences par l'émetteur/récepteur mobile (200 ; 200a ; 200b) en fonction des informations sur l'utilisation de ressources radio de l'émetteur/récepteur de station de base de recouvrement (400 à 450), la configuration de mesure comprenant des informations sur les ressources radio du deuxième canal de fréquences à mesurer,
les informations sur l'utilisation de ressources radio comprenant des informations sur des ressources de temps utilisées par l'émetteur/récepteur de station de base de recouvrement (400 à 450) dans le deuxième canal de fréquences,
les ressources de temps correspondant à une pluralité de sous-trames d'une structure de trame radio, les informations sur l'utilisation de ressources radio comprenant des informations sur la pluralité de sous-trames durant lesquelles la transmission d'au moins certaines des ressources radio de l'émetteur/récepteur de station de base de recouvrement (400 à 450) est suspendue,
la configuration de mesure pour l'émetteur/récepteur mobile (200 ; 200a ; 200b) étant adaptée de sorte que :
des mesures soient réalisées par l'émetteur/récepteur mobile (200 ; 200a ; 200b) sur les signaux du deuxième canal de fréquences au moyen des ressources radio, dont la transmission n'est pas suspendue par l'émetteur/récepteur de station de base de recouvrement (400 à 450), ou
des mesures soient réalisées par l'émetteur/récepteur mobile (200 ; 200a ; 200b) sur les signaux du deuxième canal de fréquences au moyen des ressources radio utilisées par l'émetteur/récepteur de station de base de recouvrement (400 à 450), la transmission d'au moins certaines d'entre-elles étant suspendue.

8. Procédé pour fournir un résultat de mesure dans un émetteur/récepteur mobile (200 ; 200a ; 200b) adapté pour communiquer avec un émetteur/récepteur de station de base (100 ; 100a ; 100b) au moyen de signaux radio d'un premier canal de fréquences et avec un émetteur-récepteur de station de base de recouvrement (400 à 450) au moyen de signaux radio d'un deuxième canal de fréquences différent du premier canal de fréquences, le deuxième canal de fréquences comprenant une pluralité de ressources radio, comprenant les étapes suivantes :
recevoir (730) des informations sur une configuration de mesure à partir de l'émetteur/récepteur de station de base (100; 100a; 100b), les informations sur la configuration de mesure comprenant des informations sur les ressources radio du deuxième canal de fréquences à mesureur ;
mesurer (740) les signaux du deuxième canal de fréquences en fonction des informations sur les ressources radio pour déterminer un résultat de mesure ; et
transmettre (750) le résultat de mesure à l'émetteur/récepteur de station de base (100 ; 100a ; 1 00b),
dans lequel les informations sur les ressources radio comprennent des informations sur des ressources de temps utilisées par l'émetteur/récepteur de station de base de recouvrement (400 à 450) dans le deuxième canal de fréquences,
dans lequel les ressources de temps correspondent à une pluralité de sous-trames d'une structure de trame radio, dans lequel les informations sur les ressources radio comprennent des informations sur la pluralité de sous-trames durant lesquelles la transmission d'au moins certaines des ressources radio de l'émetteur/récepteur de station de base de recouvrement (400 à 450) est suspendue, dans lequel la configuration de mesure comprend des informations sur :
la mesure des signaux du deuxième canal de fréquences au moyen des ressources radio, dont la transmission n'est pas suspendue par l'émetteur/récepteur de station de base de recouvrement (400 à 450), ou
la mesure des signaux du deuxième canal de fréquences au moyen des ressources radio utilisées par l'émetteur/récepteur de station de base de recouvrement (400 à 450), la transmission d'au moins certaines d'entre-elles étant suspendue.

9. Programme informatique possédant un code de programme pour exécuter le procédé selon l'une des revendications 7 et 8 lorsque le programme informatique est exécuté sur un ordinateur ou un processeur.
